# EUROPÄISCHE PATENTSCHRIFT

(11) **EP 2 018 410 B1**
(45) Veröffentlichungstag und Bekanntmachung des Hinweises auf die Patenterteilung: **10.07.2013**
(21) Anmeldenummer: 07729089.8
(22) Anmeldetag: 14.05.2007
(51) Int. Cl.: C08L 83/08, C08L 71/12, C08K 5/54, C09D 201/10, C09J 201/10, C08G 65/336

(54) **VERBESSERUNG DER ELASTISCHEN RÜCKSTELLUNG BEI ALKOXYSILANVERNETZTEN POLYMEREN**
ALKOXYSILANE CROSS-LINKED POLYMERS HAVING IMPROVED ELASTIC RECOVERY PROPERTIES
AMÉLIORATION DE LA FORCE DE RAPPEL ÉLASTIQUE DANS DES POLYMÈRES À RÉTICULATION ALCOXYSILANE

(30) Priorität: 16.05.2006 DE 102006022834
(43) Veröffentlichungstag der Anmeldung: 28.01.2009
(73) Patentinhaber: Wacker Chemie AG, 81737 München (DE)
(72) Erfinder: SCHINDLER, Wolfram, 84577 Tüssling (DE); SCHWIEBACHER, Elke, 84359 Simbach (DE)
(74) Vertreter: Fritz, Helmut
(86) Internationale Anmeldenummer: PCT/EP2007/054637
(87) Internationale Veröffentlichungsnummer: WO 2007/131986

(56) Entgegenhaltungen:
- EP-A- 1 179 571

## Beschreibung

Die Erfindung betrifft ein Verfahren zur Verbesserung der elastischen Rückstellung der vernetzten Abmischungen von alkoxysilanterminierten Polymeren.

Polymersysteme, die über reaktive Alkoxysilylgruppen verfügen, sind seit langem bekannt. In Gegenwart von Luftfeuchtigkeit sind diese alkoxysilantermierten Polymere bereits bei Raumtemperatur in der Lage, unter Abspaltung der Alkoxygruppen miteinander zu kondensieren. Je nach Gehalt an Alkoxysilangruppen und deren Aufbau bilden sich dabei hauptsächlich langkettige Polymere (Thermoplaste), relativ weitmaschige dreidimensionale Netzwerke (Elastomere) oder aber hochvernetzte Systeme (Duroplaste).

Dabei kann es sich sowohl um alkoxysilanterminierte Polymere mit organischem Rückgrat handeln, z.B. um Polyurethane, Polyester, Polyether etc., beschrieben u.a. in EP-A-269 819, EP-A-931 800, WO 00/37533, US 3,971,751 und DE 198 49 817, als auch um Polymere, deren Rückgrat ganz oder zumindest zum Teil aus Organosiloxanen besteht, beschrieben u.a. in WO 96/34030 und US 5,254,657.

Entsprechend der zahllosen Möglichkeiten zur Gestaltung von derartigen silanterminierten Polymersystemen lassen sich sowohl die Eigenschaften der unvernetzten Polymere bzw. der polymerhaltigen Mischungen (Viskosität, Schmelzpunkt, Löslichkeiten etc.) als auch die Eigenschaften der fertig vernetzten Massen (Härte, Elastizität, Zugfestigkeit, Reißdehnung, Hitzebeständigkeit etc.) nahezu beliebig einstellen. Entsprechend vielfältig sind daher auch die Einsatzmöglichkeiten von derartigen silanterminierten Polymersystemen. So lassen sie sich beispielsweise zur Herstellung von Elastomeren, Dichtstoffen, Klebstoffen, elastischen Klebesystemen, harten und weichen Schäumen, den unterschiedlichsten Beschichtungssystemen oder für Abformmassen verwenden. Diese Produkte lassen sich in jeder Form applizieren, wie z.B. streichen, sprühen, gießen, pressen, spachteln etc. je nach Zusammensetzung der Formulierungen.

Neben der Härtung der Massen und den mechanischen Eigenschaften des Vulkanisats sind vor allem bei Anwendungen im Kleb- und Dichtstoffbereich eine gute Haftung auf unterschiedlichsten Substraten und gute elastische Eigenschaften gefordert. Formulierungen silanvernetzender Polymere zeigen hier in aller Regel sehr gute Eigenschaften.

Das Haftungsprofil wird vielfach durch Zusatz von organofunktionellen Haftvermittlern verbessert bzw. optimiert. Die Anwendung derartiger Silane ist Stand der Technik und in diversen Monographien oder Veröffentlichungen beschrieben. Daneben gibt es auch noch spezielle neu entwickelte Haftvermittlersilane, wie in EP 997469 A oder EP 1216263 A beschrieben, aber auch eine Kombination von Silanen, wie in EP 1179571 A gezeigt, ist oft zielführend.

Neben einer guten Haftung müssen Klebstoffe aber vor allem Dichtstoffe auch eine sehr gute Elastizität aufweisen. Dabei spielt nicht nur die Dehnung eine Rolle, sondern auch die Relaxation nach Dehnung oder Stauchung. Diese wird üblicherweise als Druckverformungsrest, Kriechverhalten oder als Rückstellverhalten gemessen. Beispielsweise wird in der ISO 11600 eine Rückstellung über 60 % oder sogar 70 % für elastische Dichtstoffe gefordert.

In WO 2007/131912 A ist eine Dimethoxy(methyl)silylmethyl-carbamat-terminierten Polyether aufweisende Mischung beschrieben, die Glycidoxypropyl-trimethoxysilan und Aminopropyl-trimethoxysilan enthält.

Das elastische verhalten wird vielfach durch die Formulierung, aber auch durch die Art der silanvernetzenden Basispolymere bestimmt. Silicondichtstoffe, die über Silane aushärten, zeigen hier meist ein hervorragendes Rückstellverhalten. In anderen silanvernetzenden Polymeren, speziell wenn nur noch difunktionelle Endgruppen am Polymer sind, zeigen oft unzureichende Rückstellungen. Hier ist die Formulierung dann maßgeblich für die Eigenschaften. Beispielsweise beschreibt US 6576733 eine Möglichkeit zur Verbesserung der Rückstellung durch ein spezielles Katalysatorsystem. Ferner ist bekannt, dass die Verwendung von verzweigten Polymere eine Erhöhung der Netzwerkdichte und damit eine Verbesserung der Elastizität bewirkt.

Gegenstand der Erfindung ist die Verwendung der Kombination von
B) Aminoalkyl-alkoxysilan (B) und
C) Epoxyalkyl-alkoxysilan (C)
zur Verbesserung der elastischen Rückstellung der vernetzten Polymerabmischungen (P), die hergestellt werden durch Versetzen von
A) alkoxysilanterminierten Polymeren (A) mit mindestens einer Endgruppe der allgemeinen Formel (1)

   -A-(CH₂)ₘ-SiR¹ₐ(OR²)₃₋ₐ (1)

   wobei
   - **A**: eine zweibindige Bindegruppe ausgewählt aus -O-, -S-, -(R³)N-, -O-CO-N(R³)-, -N(R³)-CO-O-, -N(R³)-CO-NH-, -NH-CO-N(R³)-, -N(R³)-CO-N(R³)⁻,
   - **R¹**: einen gegebenenfalls halogensubstuierten Alkyl-, Cycloalkyl-, Alkenyl- oder Arylrest mit 1-10 Kohlenstoffatomen,
   - **R²**: einen Alkylrest mit 1-6 Kohlenstoffatomen oder einen ω-Oxaalkyl-alkylrest mit insgesamt 2-10 Kohlenstoffatomen,
   - **R³**: Wasserstoff, einen gegebenenfalls halogensubstuierten cyclischen, linearen oder verzweigten C₁ bis C₁₈-Alkyl- oder Alkenylrest oder einen C₆- bis C₁₈-Arylrest,
   - **a**: eine ganze Zahl von 0 bis 2 und
   - **m**: eine ganze Zahl von 1 bis 6 bedeuten, wobei die Hauptketten der alkoxysilanterminierten Polymere (A) aufgebaut sind aus Polymeren, die ausgewählt werden aus Polysiloxanen, Polysiloxan-Urea/Urethan-Copolymeren, Polyurethanen, Polyharnstoffen, Polyethern, Polyestern, Polyacrylaten und -methacrylaten, Polycarbonaten,
   Polystyrolen, Polyamiden, Polyvinylestern oder Polyolefinen Polybutadien, Ethylen-Olefincopolymeren oder Styrol-Butadiencopolymeren und Mischungen und Kombinationen aus Polymeren mit verschiedenen Hauptketten,
   mit
B) Aminoalkyl-alkoxysilan (B) und
C) Epoxyalkyl-alkoxysilan (C).

Der Zusatz Silan (C) in Kombination mit Aminosilanen (B) bewirkt eine deutliche Verbesserung des Rückstellverhaltens, die durch Verwendung der einzelnen Silane alleine nicht erreicht werden kann. Auch kann die elastische Rückstellung durch Füllstoffe, wie Kreiden und Kieselsäuren alleine nur geringfügig beeinflusst werden.

Die Polymerabmischungen (P) können ein- oder zweikomponentig formuliert werden. In zweikomponentigen Polymerabmischungen (P) werden die beiden Silane (B) und (C) vorzugsweise der Basiskomponente zugesetzt. Besonders bevorzugt sind jedoch einkomponentig härtende Polymerabmischungen. Vorzugsweise werden bei der Herstellung der einkomponentig härtenden Polymerabmischungen zuerst Silan (C), dann Silan (B) zugesetzt, da dadurch eine besonders gleichmäßige Umsetzung der Komponenten der Polymerabmischungen (P) erreicht wird.

Die Hauptketten der einsetzbaren alkoxysilanterminierten Polymere (A) können verzweigt oder unverzweigt sein. Die mittleren Kettenlängen können beliebig entsprechend der jeweils gewünschten Eigenschaften sowohl der unvernetzten Mischung als auch der ausgehärteten Masse angepaßt werden. Sie können aus unterschiedlichen Bausteinen aufgebaut sein. Üblicherweise sind dies Polysiloxane, Polysiloxan-Urea/Urethan-Copolymere, Polyurethane, Polyharnstoffe, Polyether, Polyester, Polyacrylate und -methacrylate, Polycarbonate, Polystyrole, Polyamide, Polyvinylester oder Polyolefine wie z.B. Polyethylen, Polybutadien, Ethylen-Olefincopolymere oder Styrol-Butadiencopolymere. Selbstverständlich können auch beliebige Mischungen oder Kombinationen aus Polymeren mit verschiedenen Hauptketten eingesetzt werden.

Zur Herstellung von Polymeren (A) mit Silanterminierungen der allgemeinen Formel (1) sind eine Vielzahl von Möglichkeiten bekannt, insbesondere:
- Copolymerisationen unter Beteiligung von ungesättigten Monomeren, die über Gruppen der allgemeinen Formel (1) verfügen. Beispiele für derartige Monomere wären Vinyltrimethoxysilan, Vinyl-methyldimethoxysilan, (Meth-) Acryloyloxypropyl-trimethoxysilan, (Meth-)Acryloyloxymethyl-trimethoxysilan, (Meth-)Acryloyloxymethyl-methyldimethoxysilan oder auch die entsprechenden Ethoxysilylverbindungen.
- Aufpfropfung von ungesättigten Monomeren, die über Gruppen der allgemeinen Formel (1) verfügen auf Thermoplaste wie Polyethylen. Beispiele für derartige Monomere wären Vinyltrimethoxysilan, Vinyl-methyldimethoxysilan, (Meth-) Acryloyloxypropyl-trimethoxysilan, (Meth-)Acryloyloxymethyl-trimethoxysilan, (Meth-)Acryloyloxymethyl-methyldimethoxysilan oder auch die entsprechenden Ethoxysilylverbindungen.
- Hydrosilylierung von H-Silanen wie Dimethoxymethylsilan, Diethoxymethylsilan, Trimethoxymethylsilan oder Triethoxysilan an ungestättigten, endständigen oder kettenständigen Doppelbindungen meist unter Platinkatalyse.
- Umsetzung eines Präpolymeren (A1) mit einem oder mehreren Organosilanen (A2) der allgemeinen Formel (2)

   C-B-(CH₂)ₘ-SiR¹ₐ(OR²)₃₋ₐ (2)

   in der **R¹**, R², **R³**, **m** und **a** die oben genannten Bedeutungen aufweisen,
   - **B**: ein Sauerstoff-, Stickstoff- oder Schwefelatom bedeutet und
   - **C-B-**: eine funktionelle Gruppe darstellt, die reaktionsfähig ist gegenüber geeigneten funktionellen Gruppen des Präpolymeren (A1).

Ist dabei das Präpolymer (A1) selbst aus mehreren Bausteinen (A11, A12 ...) zusammengesetzt, so ist es nicht unbedingt erforderlich, dass aus diesen Bausteinen (A11, A12 ...) zunächst das Präpolymer (A1) hergestellt wird, welches anschließend mit dem Silan (A2) zum fertigen Polymer (A) umgesetzt wird. So ist hier auch eine Umkehrung der Reaktionsschritte möglich, bei dem einer oder mehrere Bausteine (A11, A12 ...) zunächst mit dem Silan (A2) umgesetzt werden, und die dabei erhaltenen Verbindungen erst anschließend mit den verbleibenden Bausteinen (A11, A12 ...) zum fertigen Polymer (A) umgesetzt werden.

Beispiele für Präpolymere (A1) bestehend aus Bausteinen A11, A12 sind OH-, NH- oder NCO-terminierte Polyurethane und Polyharnstoffe, welche sich aus Polyisocyanaten (Baustein A11) sowie Polyolen (Baustein A12) herstellen lassen.

Bevorzugte Polymere (A) mit Silanterminierungen der allgemeinen Formel (1) sind silanterminierte Polyether und Polyurethane, besonders bevorzugt Polyether, die aus Organosilan (A2) der allgemeinen Formel (4) und dem Präpolymeren (A1) hergestellt werden.

Bei einer bevorzugten Herstellungsweise der Polymere (A) wird vorzugsweise ein Silan (A2) eingesetzt, das ausgewählt wird aus Silanen der allgemeinen Formeln (3)

OCN-(CH₂)ₘ-SiR¹ₐ(OR²)₃₋ₐ (3)

wobei
**R¹**, **R²**, **R³** und **a** die oben angegebenen Bedeutungen besitzen und **m** gleich 1 oder 3 ist.

Bei der Herstellung des Polymeren (A) sind die Konzentrationen aller an sämtlichen Reaktionsschritten beteiligter Isocyanatgruppen und aller isocyanatreaktiver Gruppen sowie die Reaktionsbedingungen bevorzugt so gewählt, daß im Laufe der Polymersynthese sämtliche Isocyanatgruppen abreagieren. Das fertige Polymer (A) ist somit bevorzugt isocyanatfrei.

Als Polyole für die Herstellung der Polymere (A) eignen sich besonders aromatische und aliphatische Polyesterpolyole und Polyetherpolyole, wie sie in der Literatur vielfach beschrieben sind. Prinzipiell können aber sämtliche polymeren, oligomeren oder auch monomeren Alkohole mit ein oder mehr OH-Funktionen eingesetzt werden.

Vorzugsweise bedeutet **R¹** einen Phenylrest oder Alkyl- oder Alkenylrest mit 1-6 Kohlenstoffatomen, insbesondere Methyl-, Ethyl- oder Vinylrest.

Vorzugsweise bedeutet **R²** einen Alkylrest mit 1-3 Kohlenstoffatomen, insbesondere Methyl- oder Ethylrest. Vorzugsweise bedeutet **R³** Wasserstoff, einen Phenylrest oder Alkyl- oder Alkenylrest mit 1-6 Kohlenstoffatomen, insbesondere Methyl-, Ethyl- oder n-Propylrest.

**m** ist vorzugsweise 1 oder 3.

Bevorzugte Aminoalkyl-alkoxysilane (B) sind solche der allgemeinen Formel (4)

R⁷ᵤR⁸ᵥSi(OR⁹)₄₋ᵤ₋ᵥ (4),

in der
- **R⁷**: einen gegebenenfalls halogensubstuierten Alkyl-, Cycloalkyl-, Alkenyl- oder Arylrest mit 1-10 Kohlenstoffatomen,
- **R⁸**: einen einwertigen, gegebenenfalls halogensubstituierten, SiC-gebundene Aminogruppe aufweisende C₁-C₃₀-Kohlenwasserstoffrest,
- **R⁹**: einen Alkylrest mit 1-6 Kohlenstoffatomen oder einen ω-Oxaalkyl-alkylrest mit insgesamt 2-10 Kohlenstoffatomen,
- **u**: 0, 1 oder 2 und
- **v**: 1, 2 oder 3 bedeuten,
mit der Maßgabe, daß die Summe aus **u** und **v** kleiner oder gleich 3 ist.

Beispiele und bevorzugte Beispiele für den Rest **R⁷** sind vorstehend bei Rest **R¹** aufgeführt.

Beispiele und bevorzugte Beispiele für den Rest **R⁸** sind vorstehend bei Rest **R²** aufgeführt.

Bevorzugt handelt es sich bei Rest **R⁸** um einen Rest der allgemeinen Formel (5)

R¹⁰₂NR¹¹- (5),

worin
- **R¹⁰**: Wasserstoffatom oder einwertige, gegebenenfalls substituierte C₁-C₁₀-Kohlenwasserstoffreste oder C₁-C₁₀-Aminokohlenwasserstoffreste und
- **R¹¹**: einen zweiwertigen C₁-C₁₅-Kohlenwasserstoffrest bedeuten.

Beispiele für den Rest **R¹⁰** sind die für Rest **R¹** gegebenen Beispiele für Kohlenwasserstoffreste, sowie mit Aminogruppen substituierte Kohlenwasserstoffreste, wie Aminoalkylreste, wobei der Aminoethylrest besonders bevorzugt ist.

Beispiele für Rest **R¹¹** sind der Methylen-, Ethylen-, Propylen-, Butylen-, Cyclohexylen-, Octadecylen-, Phenylen- und Butenylenrest. Bevorzugt handelt es sich bei Rest **R¹¹** um zweiwertige Kohlenwasserstoffreste mit 1 bis 10 Kohlenstoffatomen, besonders bevorzugt 1 bis 4 Kohlenstoffatomen, insbesondere um den n-Propylenrest.

Beispiele für den Rest **R⁸** sind Aminopropyl-, Aminoethylaminopropyl-, Ethylaminopropyl-, Butylaminopropyl-, Cyclohexylaminopropyl-, Phenylaminopropyl-, Aminomethyl-, Aminoethylaminomethyl-, Ethylaminomethyl-, Butylaminomethyl-, Cyclohexylaminomethyl-, Phenylaminomethylgruppen.

Vorzugsweise weist das Silan (C) die allgemeine Formel (6)

R⁶(CH₂)ₙSiR⁵ₛ(OR⁴)₃₋ₛ (6),

auf, in der
- **R⁴**: einen Methyl-, Ethyl- oder iso-Propylrest,
- **R⁵**: einen gegebenenfalls halogensubstituierten C₁-C₁₀-Kohlenwasserstoffrest,
- **R6**: einen gegebenenfalls halogensubstituierten, eine Epoxygruppe aufweisenden C₂-C₂₀-Kohlenwasserstoffrest, der durch Ethersauerstoffatome unterbrochen sein kann,
- **R⁹**: einen Alkylrest mit 1-6 Kohlenstoffatomen,
- **n**: eine ganze Zahl von 1 bis 6 und
- **s**: 0, 1 oder 2 bedeuten.

Vorzugsweise bedeutet **n** die Zahlen 1 oder 3. Vorzugsweise bedeutet **s** die Zahlen 1 oder 0. Vorzugsweise bedeutet **R⁵** einen Methyl- oder Phenylrest. Beim Epoxygruppe aufweisenden C₂-C₂₀-Kohlenwasserstoffrest **R⁶** sind die Kohlenstoffatome der Epoxygruppe mit eingeschlossen. Vorzugsweise bedeutet **R⁶** einen Rest der allgemeinen Formel (7) 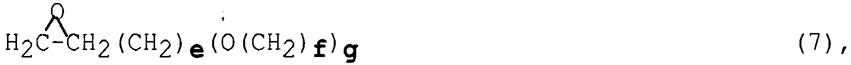 in der
- **e**: 0, 1 oder 2,
- **f**: 1, 2 oder 3, und
- **g**: 0, 1, 2 oder 3 bedeuten.

Bevorzugte Beispiele für den Rest **R⁶** sind Glycidoxy- und (3,4-Epoxycyclohexyl)ethylreste.

In den Polymerabmischungen (P) beträgt der Anteil an alkoxysilanterminierten Polymeren (A) vorzugsweise 10-70 Gew.-%, besonders bevorzugt 15-50 Gew.-%, insbesondere 20-40 Gew.-%. Der Anteil an Aminoalkyl-alkoxysilan (B) beträgt vorzugsweise 0,1-10 Gew.-%, besonders bevorzugt 0,1-5 Gew.-%, insbesondere 0,2-3 Gew.-%. Der Anteil an Silan (C) beträgt vorzugsweise 0,1-10 Gew.-%, besonders bevorzugt 0,5-5 Gew.-%, insbesondere 1-3 Gew.-%.

Die Polymerabmischungen (P) können Kondensationskatalysatoren enthalten, beispielsweise Titanatester, wie Tetrabutyltitanat, Tetrapropyltitanat, Tetraisopropyltitanat, Tetraacetylacetonattitanat;
Zinnverbindungen, wie Dibutylzinndilaurat, Dibutylzinnmaleat, Dibutylzinndiacetat, Dibutylzinndioctanoat,
Dibutylzinnacetylacetonat, Dibutytzinnoxid, oder entsprechende Verbindungen des Dioctylzinn;
basische Katalysatoren, die mit dem Aminoalkyl-alkoxysilan (B) identisch sein können, wie Aminopropyltrimethoxysilan, Aminopropyltriethoxysilan, N-(2-Aminoethyl)-aminopropyltrimethoxysilan, und andere organische Amine, wie Triethylamin, Tributylamin, 1,4-Diazabicyclo[2,2,2]octan, N,N-Bis-(N,N-dimethyl-2-aminoethyl)-methylamin, N,N-Dimethylcyclohexylamin, N,N-Dimethylphenlyamin, N-Ethylmorpholinin etc.;
Saure Katalysatoren, wie Phosphorsäure- bzw. Phosphorsäureester, Toluolsulfonsäuren, Mineralsäuren.
Bevorzugt sind Aminosilane alleine oder in Kombination mit Dibutylzinnverbindungen.
Die Kondensationskatalysatoren werden bevorzugt in Konzentrationen von 0,01-10 Gew.-%, besonders bevorzugt 0,1- 2 Gew.-% der Polymerabmischungen (P) eingesetzt.
Die verschiedenen Katalysatoren können sowohl in reiner Form als auch als Mischungen verwendet werden.

Die Polymerabmischungen (P) können Füllstoffe enthalten, beispielsweise Kalciumcarbonate in Form von natürlichen gemahlenen Kreiden, gemahlenen und beschichteten Kreiden, gefällten Kreiden, gefällten und beschichteten Kreiden, Tonmineralien, Bentonite, Kaoline, Talkum, Titandioxide, Aluminiumoxide, Aluminiumtrihydrat, Magnesiumoxid, Magnesiumhydroxyl, Ruße, gefällte oder pyrogene Kieselsäuren. Die Füllstoffe werden bevorzugt in Konzentrationen von 10-70 Gew.-%, besonders bevorzugt 30-60 Gew.-% der Polymerabmischungen (P) eingesetzt.

Die Polymerabmischungen (P) können Wasserfänger und Silanvernetzer enthalten, beispielsweise Vinylsilane wie Vinyltrimethoxy-, Vinyltriethoxy-, Vinylmethyldimethoxy-, O-Methylcarbamatomethyl-methyldimethoxysilan, O-Methylcarbamatomethyltrimethoxysilan, O-Ethylcarbamatomethyl-methyldiethoxysilan, O-Ethylcarbamatomethyl-triethoxysilan, allgemein Alkylalkoxysilane oder aber auch weitere organofunktionelle Silane.

Die Wasserfänger und Silanvernetzer werden bevorzugt in Konzentrationen von 0,1 - 10 Gew.-%, besonders bevorzugt 0.5-2 Gew.-% der Polymerabmischungen (P) eingesetzt.

Die Polymerabmischungen (P) können Weichmacher enthalten, beispielsweise Phthalatester, wie Dioctylphthalat, Diisooctylphthalat, Diundecylphthalat, Adipinsäureester, wie Dioctyladipat, Benzoesäureester, Glycolester, Phosphorsäureester, Polyester, Polyether, Polystyrole, Polybutadiene, Polyisobutene, paraffinische Kohlenwasserstoffe, höhere, verzweigte Kohlenwasserstoffe etc.

Die Weichmacher werden bevorzugt in Konzentrationen von bis zu 40 Gew.-%, der Polymerabmischungen (P) eingesetzt.

Die Polymerabmischungen (P) können Thixotropiermittel enthalten, beispielsweise hydrophile pyrogene Kieselsäuren, beschichtete pyrogene Kieselsäuren, gefällte Kieselsäuren, Polyamidwache, hydrierte Ricinusöle, Stearatsalze oder gefällte Kreiden. Auch die o.g. Füllstoffe können zur Einstellung der Fließeigenschaften benutzt werden.

Die Thixotropiermittel werden bevorzugt in Konzentrationen von 1-5 Gew.-% der Polymerabmischungen (P) eingesetzt.

Die Polymerabmischungen (P) können weiterhin Lichtschutzmittel, wie sogenannte HALS-Stabilisatoren, Fungizide, Flammschutzmittel, Pigmente etc. enthalten, wie sie für den Einsatz in herkömmlichen alkoxyvernetzenden einkomponentigen Massen bekannt sind.

Zur Erzeugung der jeweils gewünschten Eigenschaftsprofile sowohl der unvernetzten Polymerabmischungen (P) als auch der ausgehärteten Massen werden vorstehende Zusätze bevorzugt eingesetzt.

Vorzugsweise wird bei der Herstellung der Polymerabmischungen (P) zuerst eine Mischung aus Polymer (A) und Füllstoff hergestellt, anschließend Silan (C) eingemischt und danach Aminoalkyl-alkoxysilan (B) zugemischt.

Für die Polymerabmischungen (P) existieren zahllose verschiedene Anwendungen im Bereich der Kleb-, Dicht- und Fugendichtstoffe, Oberflächenbeschichtungen sowie auch bei der Herstellung von Abformmassen und Formteilen.

Dabei sind die Polymerabmischungen (P) für zahllose unterschiedliche Untergründe wie z.B. mineralische Untergründe, Metalle, Kunststoffe, Glas, Keramik etc. geeignet.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind soweit nicht anders angegeben, alle Mengen- und Prozentangaben auf das Gewicht bezogen.

### Beispiele

### Beispiele 1

### Formulierungen mit einem silanterminierten Polyether mit Methylen-Methyldimethoxysilylendgruppen (alpha-Dimethoxy)

125 g des silanterminierten Polyethers, erhältlich unter der Bezeichnung GENIOSIL® STP-E10 bei der Wacker Chemie AG werden in einem Laborplanetenmischer der Fa. PC-Laborsystem, ausgestatte mit zwei Balkenmischern bei ca. 25 °C mit 75 g Diisodecyl-phthalat (Fa. Merck) und 10 g Vinyltrimethoxysilan, erhältlich unter der Bezeichung GENIOSIL® XL10 (Wacker Chemie AG), 2 Minuten bei 200 U/min vermischt. Danach werden 10 g einer hyrophilen Kieselsäure HDK® V15 (Wacker Chemie AG) eingerührt bis sie homogen verteilt ist. Anschießend werden 252 g Kreide BLR3 (Fa. Omya) eingebracht und der Füllstoff unter Rühren eine Minute bei 600 U/min aufgeschlossen. Nach Einarbeitung der Kreide werden 5 g Glycidoxypropyl-trimethoxysilan (GENIOSIL® GF80 - Wacker Chemie AG) 1 Minute bei 200 U/min verteilt. Abschließend werden 5 g Aminopropyl-trimethoxysilan (GENIOSIL® GF96 - Wacker Chemie AG) während 1 Minute bei 200 U/min verteilt, 2 Minuten bei 600 U/min und 1 Minute bei 200 U/min im Teilvakuum (ca. 100 mbar) homogenisiert und blasenfrei gerührt.

Die Formulierung wird in 310 ml PE-Kartuschen abgefüllt und einen Tag bei 25°C gelagert.

Die Vergleichsbeispiele 1b und 1c werden analog hergestellt. Die Ergebnisse sind in Tabelle 1 wiedergegeben.

**Tabelle 1:**

| | **Beispiel 1a** | **Vergleichsbeispiel 1b*** | **Vergleichsbeispiel 1c*** |
|---|---|---|---|
| **GENIOSIL® STP-E10** | 25% | 30% | 30% |
| **Diisodecylphthalat** | 15% | 15% | 30% |
| **GENIOSIL® XL 10** | 2% | 2% | 1% |
| **HDK® V 15** | 2% | | |
| **HDK® H18** | | 3% | 3% |
| **Kreide - Carbital 110** | 54% | | |
| **Kreide Omya® BLR 3** | | 50% | 35% |
| **GENIOSIL® GF 80** | 1% | | |
| **GENIOSIL® GF 96** | 1% | 1% | 1% |
| | | | |
| **Hautbildungszeit** | 46 min | 38 min | 52 min |
| | | | |
| **Vulkanisat nach DIN 53504 und DIN 53505** | | | |
| **Modul S1 in N/mm²** | 2,15 | 0,89 | 0,56 |
| **Shore A** | 62 | 48 | 32 |
| **Reißdehnung S1 in %** | 107 | 289 | 268 |
| **Reißfestigkeit S1 in N/mm²** | 2,2 | 1,1 | 0,8 |
| | | | |
| **Rückstellvermögen (ISO 7389; nach 4 Wochen bei RT)** | 50% | 20% | 26% |

| | | | |
|---|---|---|---|
| * nicht erfindungsgemäss | | | |

### Bestimmung der mechanischen Eigenschaften

Die Proben werden auf ausgefräßten Teflon®-Platten mit 2 mm Tiefe ausgestrichen und 2 Wochen bei 23 °C, 50 rel. Luftfeuchte gehärtet.

Die mechanischen Eigenschaften werden nach DIN 53504 (Zugprüfung) und DIN 53505 (Härte Shore A) bestimmt. Die Messung der Rückstellung erfolgt nach ISO 7389 und vierwöchiger Vorlagerung der H-Prüfkörper bei 23°C, 50 rel. Luftfeuchte. Die Bestimmung der Rückstellung erfolgt mit 25 % gedehnten Prüfkörpern.

Vergleichsbeispiele 1b und 1c zeigen, dass der Füllstoff nicht viel Einfluss hat.

### Beispiele 2

### Formulierungen mit einem silanterminierten Polyether mit Propylen-Trimethoxysilylendgruppen (gamma-Trimethoxy).

Die Herstellung der Formulierungen und die Untersuchung der mechanischen Eigenschaften der erfindungsgemäßen Beispiele 2a-c und der nicht erfindungsgemäßen Beispiele 2d-e wird analog zum Beispiel 1 durchgeführt. Als Polymer wird GENIOSIL® STP-E35 (Wacker Chemie AG) verwendet.

Die Werte sind in Tabelle 2 aufgeführt:

**Tabelle 2**

| **Beispiel** | **2a** | **2b** | **2c** | **2d*** | **2e*** |
|---|---|---|---|---|---|
| **GENIOSIL® STP-E35** | 20,0% | 20,0% | 21,0% | 20,0% | 22,0% |
| **Diisodecylphthalat** | 40,0% | 40,0% | 41,0% | 40,0% | 42,0% |
| **GENIOSIL® XL 10** | 1,0% | 2,0% | 2,0% | 2,0% | 2,0% |
| **GENIOSIL® XL 65** | 1,0% | | 1,0% | 1,0% | |
| **GENIOSIL® GF 80** | 1,0% | 1,0% | 1,0% | | |
| **HDK® H18** | 3,0% | 3,0% | | 3,0% | |
| **Kreide - Socal U1S2** | 33,0% | 33,0% | 33,0% | 33,0% | 33,0% |
| **GENIOSIL® GF 96** | 1,0% | 1,0% | 1,0% | 1,0% | 1,0% |
| **Dibutylzinndilaurat** | 0,25% | 0,25% | 0,25% | 0,25% | 0,25% |
| | | | | | |
| **Hautbildungszeit** | 18 min | 18 min | 23 min | 25 min | 11 min |
| | | | | | |
| **Vulkanisat nach DIN 53504 und DIN 53505** | | | | | |
| **Modul S1 in N/mm²** | 0,58 | 0,70 | 0,43 | 0,29 | 0,33 |
| **Shore A** | 27 | 33 | 23 | 20 | 20 |
| **Reißdehnung S1 in %** | 296 | 254 | 192 | 759 | 382 |
| **Reißfestigkeit S1 in N/mm²** | 1,4 | 1,4 | 0,8 | 1,6 | 1,2 |
| | | | | | |
| **Rückstellung (ISO 7389; nach 4 Wo RT)** | 95% | 96% | 94% | 53% | 77% |

| | | | | | |
|---|---|---|---|---|---|
| * nicht erfindungsgemäss | | | | | |

## Patentansprüche

1. Verwendung der Kombination von
B) Aminoalkyl-alkoxysilan (B) und
C) Epoxyalkyl-alkoxysilan (C) zur Verbesserung der elastischen Rückstellung der vernetzten Polymerabmischungen (P), die hergestellt werden durch Versetzen von
A) alkoxysilanterminierten Polymeren (A) mit mindestens einer Endgruppe der allgemeinen Formel (1)
-A-(CH₂)ₘ-SiR¹ₐ(OR²)₃₋ₐ (1)
wobei
**A** eine zweibindige Bindegruppe ausgewählt aus -O-, -S-, -(R³)N-, -O-CO-N(R³)-, -N(R³)-CO-O-, -N(R³)-CO-NH-, -NH-CO-N(R³)-, -N(R³)-CO-N(R³)-,
**R¹** einen gegebenenfalls halogensubstuierten Alkyl-, Cycloalkyl-, Alkenyl- oder Arylrest mit 1-10 Kohlenstoffatomen,
**R²** einen Alkylrest mit 1-6 Kohlenstoffatomen oder einen ω-Oxaalkyl-alkylrest mit insgesamt 2-10 Kohlenstoffatomen,
**R³** Wasserstoff, einen gegebenenfalls halogensubstuierten cyclischen, linearen oder verzweigten C₁ bis C₁₈-Alkyl- oder Alkenylrest oder einen C₆- bis C₁₈-Arylrest,
**a** eine ganze Zahl von 0 bis 2 und
**m** eine ganze Zahl von 1 bis 6 bedeuten,
wobei die Hauptketten der alkoxysilanterminierten Polymere (A) aufgebaut sind aus Polymeren, die ausgewählt werden aus Polysiloxanen, Polysiloxan-Urea/Urethan-Copolymeren, Polyurethanen, Polyharnstoffen, Polyethern, Polyestern, Polyacrylaten und -methacrylaten, Polycarbonaten,
Polystyrolen, Polyamiden, Polyvinylestern oder Polyolefinen Polybutadien, Ethylen-Olefincopolymeren oder Styrol-Butadiencopolymeren und Mischungen und Kombinationen aus Polymeren mit verschiedenen Hauptketten,
mit
B) Aminoalkyl-alkoxysilan (B) und
C) Epoxyalkyl-alkoxysilan (C).

2. Verwendung nach Anspruch 1, bei dem die Polymere (A) erhältlich sind durch Umsetzung von Silanen der allgemeinen Formel (3)
OCN-(CH₂)ₘ-SiR¹ₐ(OR²)₃₋ₐ (3),
wobei R¹, R², R³ und a die in Anspruch 1 angegebenen Bedeutungen besitzen und
m gleich 1 oder 3 ist,
mit Polyesterpolyolen oder Polyetherpolyolen.

3. Verwendung nach Anspruch 1 oder 2, bei dem R² einen Alkylrest mit 1-3 Kohlenstoffatomen bedeutet.

4. Verwendung nach Anspruch 1 bis 3, bei dem m den Wert 1 bedeutet.

5. Verwendung nach Anspruch 1 bis 4, bei dem die härtenden Polymerabmischungen (P) einkomponentig hergestellt werden.

6. Verwendung nach Anspruch 5, bei dem bei der Herstellung der Polymerabmischungen (P) zuerst Silan (C), dann Silan (B) zugesetzt werden.

## Claims

1. Use of the combination of
B) aminoalkylalkoxysilane (B) and
C) epoxyalkylalkoxysilane (C) for improving the elastic recovery of the crosslinked polymer blends (P), which are produced by admixing
B) aminoalkylalkoxysilane (B) and
C) epoxyalkylalkoxysilane (C) with
A) alkoxysilane-terminated polymers (A) having at least one terminal group of the general formula (1)
-A-(CH₂)ₘ-SiR¹ₐ(OR²)₃₋ₐ (1)
where
**A** is a divalent linking group selected from -O-, -S-, -(R³)N-, -O-CO-N(R³)-, -N(R³)-CO-O-, -N(R³)-CO-NH-, -NH-CO-N(R³)-, -N(R³)-CO-N(R³)-,
**R¹** is an optionally halogen-substituted alkyl, cycloalkyl, alkenyl, or aryl moiety having from 1 to 10 carbon atoms,
**R²** is an alkyl moiety having from 1 to 6 carbon atoms or an ω-oxaalkylalkyl moiety having a total of from 2 to 10 carbon atoms,
**R³** is hydrogen, an optionally halogen-substituted cyclic, linear, or branched C₁-C₁₈-alkyl moiety or alkenyl moiety, or a C₆-C₁₈-aryl moiety,
**a** is a whole number from 0 to 2, and
m is a whole number from 1 to 6,
where the main chains of the alkoxysilane-terminated polymers (A) are composed of polymers selected from polysiloxanes, polysiloxane-urea/urethane copolymers, polyurethanes, polyureas, polyethers, polyesters, polyacrylates and -methacrylates, polycarbonates, polystyrenes, polyamides, polyvinyl esters, or polyolefins, polybutadiene, ethylene-olefin copolymers, or styrene-butadiene copolymers, and mixtures and combinations composed of polymers having various main chains.

2. Use according to Claim 1, in which the polymers (A) are obtainable through reaction of silanes of the general formula (3)
OCN-(CH₂)ₘ-SiR¹ₐ(OR²)₃₋ₐ (3),
where **R¹**, **R²**, **R³**, and **a** are as defined in Claim 1, and
**m** is equal to 1 or 3,
with polyester polyols or polyether polyols.

3. Use according to Claim 1 or 2, in which R² is an alkyl moiety having from 1 to 3 carbon atoms.

4. Use according to any of Claims 1 to 3, in which m is the value 1.

5. Use according to any of Claims 1 to 4, in which production of the curing polymer blends (P) involves a single-component system.

6. Use according to Claim 5, in which the production of the polymer blends (P) involves addition firstly of silane (C) and then of silane (B).

## Revendications

1. Utilisation de la combinaison de
B) un aminoalkyl-alcoxysilane (B) et
C) un époxyalkyl-alcoxysilane (C) pour améliorer la force de rappel élastique des mélanges polymères réticulés (P) fabriqués par mélange
A) des polymères à terminaison alcoxysilane (A) contenant au moins un groupe terminal de formule générale (1)
-A- (CH₂)ₘ-SiR¹ₐ(OR²)₃₋ₐ (1)
dans laquelle
A signifie un groupe de liaison bivalent choisi parmi -O-, -S-, -(R³)N-, -O-CO-N(R³)-, -N(R³)-CO-O-, N(R³)-CO-NH-, -NH-CO-N(R³)-, -N(R³)-CO-N(R³)-,
R¹ signifie un radical alkyle, cycloalkyle, alcényle ou aryle de 1 à 10 atomes de carbone éventuellement à substitution halogène,
R² signifie un radical alkyle de 1 à 6 atomes de carbone ou un radical ω-oxaalkyl-alkyle contenant au total 2 à 10 atomes de carbone,
R³ signifie l'hydrogène, un radical alkyle ou alcényle en C₁ à C₁₈ cyclique, linéaire ou ramifié, éventuellement à substitution halogène, ou un radical aryle en C₆ à C₁₈,
a signifie un nombre entier de 0 à 2, et
m signifie un nombre entier de 1 à 6,
les chaînes principales des polymères à terminaison alcoxysilane (A) étant formées à partir de polymères choisis parmi les polysiloxanes, les copolymères de polysiloxane-urée/uréthane, les polyuréthanes, les polyurées, les polyéthers, les polyesters, les polyacrylates et -méthacrylates, les polycarbonates, les polystyrènes, les polyamides, les esters de polyvinyle ou les polyoléfines, le polybutadiène, les copolymères d'éthylène-oléfine ou les copolymères de styrène-butadiène et les mélanges et combinaisons de polymères contenant différentes chaînes principales,
avec
B) un aminoalkyl-alcoxysilane (B) et
C) un époxyalkyl-alcoxysilane (C).

2. Utilisation selon la revendication 1, dans laquelle les polymères (A) peuvent être obtenus par mise en réaction de silanes de formule générale (3)
OCN- (CH₂)ₘ-SiR¹ₐ(OR²)₃₋ₐ (3)
dans laquelle R¹, R², R³ et a ont les significations indiquées dans la revendication 1, et
m vaut 1 ou 3,
avec des polyester-polyols ou des polyéther-polyols.

3. Utilisation selon la revendication 1 ou 2, dans laquelle R² signifie un radical alkyle contenant 1 à 3 atomes de carbone.

4. Utilisation selon les revendications 1 à 3, dans laquelle m signifie la valeur 1.

5. Utilisation selon les revendications 1 à 4, dans laquelle les mélanges polymères durcissants (P) sont fabriqués à un composant.

6. Utilisation selon la revendication 5, dans laquelle, lors de la fabrication des mélanges polymères (P), le silane (C) est tout d'abord ajouté, puis le silane (B).
